# EUROPEAN PATENT SPECIFICATION

(11) **EP 2 838 747 B1**
(45) Date of publication and mention of the grant of the patent: **01.06.2016**
(21) Application number: 13718220.0
(22) Date of filing: 22.04.2013
(51) Int. Cl.: B60J 1/00

(54) **GLAZING SYSTEM AND METHODS**
VERGLASUNGSSYSTEM UND -VERFAHREN
SYSTÈME DE VITRAGE ET PROCÉDÉS

(30) Priority: 20.04.2012 GB 201206924
(43) Date of publication of application: 25.02.2015
(73) Proprietor: ALEXANDER DENNIS LIMITED, Falkirk FK1 4JB (GB)
(72) Inventor: TURNER, Jeremy, Falkirk FK1 4JB (GB); MOWAT, Russell, Falkirk FK1 4JB (GB); BEACH, Gavin, Falkirk FK1 4JB (GB)
(74) Representative: Rankin, Douglas
(86) International application number: PCT/GB2013/051019
(87) International publication number: WO 2013/156802

(56) References cited:
- US-A1- 2002 184 840
- US-A1- 2003 056 449
- US-A1- 2003 070 371

## Description

### Technical Field

The invention relates to the field of glazing systems for service vehicles, such as passenger service vehicles. In particular, but not exclusively, the invention relates to a glazing system, including glazing frames, for passenger service vehicles, as well as other associated apparatus and methods, such as methods of installation and/or repair.

In some examples, the invention relates to passenger service vehicles comprising such glazing systems. Those glazing systems may be provided on both single and double-deck vehicles.

### Background

Significant innovation and technology development has occurred in recent years in relation to the design of passenger service vehicles. In particular, there has been a continued drive towards providing vehicles that allow for ease of construction, ease of maintenance, ease of cleaning, fuel efficiency, reduced weight and running costs, etc., while at the same time maintaining or improving the safety of those vehicles.

The glazing on passenger service vehicles, such as the main glazing provided on either side of a vehicle, is prone to damage, such as by accident or vandalism. The ease and time with which repairs can be made in the event of such damage is an important factor in the commercial operability of such vehicles. Furthermore, the ease and time with which the construction of vehicles can be made is an important factor in the costs of providing such vehicles.

One existing type of glazing system comprises fitting a glazing panel to a rubber gasket, which is then mounted to a window frame. Such systems are prone to leaking, are not aesthetically appealing, but are easy to install and repair. An alternative system bonds glazing panels to the vehicle (e.g. using an adhesive at a periphery of the panel, and affixing this to the vehicle). Such systems are less likely to leak, are more aesthetically pleasing, but are difficult to install and/or repair.

This background serves only to set a scene to allow a skilled reader to better appreciate the following description. Therefore, none of the above discussion should necessarily be taken as an acknowledgement that that discussion is part of the state of the art or is common general knowledge. One or more aspects/embodiments of the invention may or may not address one or more of the background issues.

US 2003/0056449 (Geiger) discloses a window assembly for use with a protective transparent protective window liner.

US 2003/0070371 (Kobrehel) discloses a glazing assembly for window assembly having a removable sacrificial glazing panel.

US2002/0184840 (Farrar et al.) discloses a process for retrofitting existing windows that use a gasket to secure a sacrificial member and a glazing.

### Summary

According to a first aspect of the invention there is provided a glazing system for a passenger service vehicle.

The provision of an improved glazing system may allow for one or more of: ease of construction; ease of maintenance and/or repair; ease of cleaning; reduced weight and running costs, etc., and maintaining or improving the safety of those vehicles.

The system may comprise a glazing frame. The glazing frame may be configured to attach to a passenger service vehicle. The frame may comprise one or more frame portions, which served to form or define the overall frame when the system is attached to a service vehicle. In other words, the glazing frame may comprise one or more frame portions (e.g. for use with waist rail, cant rail, and/or pillars) such that, when attached to the vehicle, they form an overall glazing frame for use with a glazing panel. In such examples, once assembled, the system may comprise a plurality of defined frames.

The/each glazing frame may comprise a glazing mount, which may extend along (e.g. around, such as inwardly around) some or all of the frame. The mount may be configured to associate a glazing panel with the frame. The mount may be configured to prevent a glazing panel from being forced outwardly from the vehicle (e.g. by a passenger). The frame (e.g. the mount) may be formed from an alloy.

The system may further comprise a removable retainer configured to engage with the frame, and to retain a glazing panel against the glazing mount. In other words, in use of the vehicle, the glazing panel is retained against the mount by the removable retainer. In some examples, the system is configured such that the removable retainer is configured to directly mount with a glazing panel (e.g. rather than indirectly, via secondary glazing, or a sacrificial interior or glazing).

The removable retainer may be configured to engage with a frame retainer. That frame retainer may be provided on the frame itself (e.g. formed integrally with the frame). The removable retainer may be configured to engage between the frame retainer and a glazing panel (e.g. in an interference manner) in order to retain, or urge and retain, a glazing panel against the glazing mount. Some or all of the removable member may be resiliently deformable.

The frame retainer may be configured to engage in a complementary manner with a portion of the removable retainer. The frame retainer may be configured as a recess, for example a recess on the frame. The removable retainer may comprise a retaining rib, element, or other such protrusion, specifically configured to locate and engage with the recessed frame retainer. The removable retainer may additionally comprise a locating element, configured to allow for ease of location of the removable retainer with the frame retainer (e.g. for complementary location with a corresponding recess). The locating element may be provided with the rib or protrusion, such that a corresponding recess is provided at the frame retainer. In use, the locating element of the removable retainer may be located with a corresponding recess of the frame retainer.

The removable retainer may comprise one or more fins, configured to engage with glazing (e.g. two or more fins). Each fin may be configured to be substantially parallel with each further fin. The removable retainer may comprise two fins configured to engage with a glazing panel (e.g. in an interference manner).

The removable retainer may comprise one or more interior fins. The interior fin may be configured to engage with a portion of the frame. Such a configuration may provide a contiguous surface on the inside of the frame.

The removable retainer may comprise a removal element, configured to allow a user to remove the retainer from the frame. The removal element may be operable by hand.

The removable retainer may comprise a removal pivot. In some examples, the removal pivot may be configured to cooperate with the removal element (and/or the frame) in order to assist with removal of the removable retainer from the frame. Actuation of the removal element may urge the removable retainer from the frame, causing the removal pivot to pivot on the frame (or a portion thereof), and assist with removal of the retainer from the frame (e.g. the removable retainer from the frame retainer, and so from the frame).

The removal pivot may additionally or alternatively assist with locating of the removable retainer. The frame may comprise a pivot region for use with the removal pivot. The pivot region may be provided at or with the frame retainer.

The removable retainer may be configured as a removable strip. The removable retainer may be configured to extend around some or all of the frame. The removable retainer may be configured to extend along one or more sections of the frame (e.g. top section, a bottom section, and/or a one or more side sections). The glazing system may comprise a plurality of removable retainers (e.g. four per window).

The, or each, removable retainer may be configured to engage with the frame, and to urge and retain glazing against a frame seal, which in turn retains glazing against the frame. The seal may be configured to associate glazing with the frame. The seal may be provided at the frame mount. The seal may be configured to be removable/replaceable from the frame. The seal may be configured to extend around some, or all, of the frame or mount. The seal may be compressible.

The system comprises one or more secondary retainers. The or each secondary retainer is additionally configured to retain a glazing panel against the mount/frame. The secondary retainer may be configured to affix to the frame, and retain glazing against the mount. The secondary retainer may be screwed, bolted, adhered, or the like, to the frame, in order to retain a glazing panel. The secondary retainer is essentially concealed, by the removable retainer (e.g. covered and concealed from a passenger) when in use. The system may comprise a plurality of discrete secondary retainers (e.g. provided at particular intervals on the frame).

The system may comprise one or more strips of removable retainer, each covering a plurality of discrete secondary retainers.

The system may comprise one or more exterior frame portions. The system may additionally comprise one or more interior frame portions. The glazing frame may be provided by one or more exterior frame portions, together with one or more interior frame portions.

The exterior and interior frame portions may be configured to engage with, or mount with, an exterior and an interior of a passenger service vehicle respectively (e.g. via an intended window aperture of the passenger service vehicle). In order words, the formed frame may extend from the exterior of a vehicle to the interior of a vehicle.

Each portion may be further configured to operatively engage together so as to retain the frame on the passenger service vehicle (e.g. retained on a waist rail).

The frame portions may comprise complementary engagement elements, configured to retain one portion of the frame to the other. The frame portions may comprise complementary recesses and protrusions, configured to engage and retain the frame portions together. A retained exterior frame portion and interior frame portion may provide a frame depth. The engagement elements may be configured to allow for a variable frame depth (e.g. in a ratchet-style arrangement).

One of the interior frame portion or exterior frame portion may comprise a plurality of engagement elements, configured to engage with a complementary element on one of the exterior frame portion or interior frame portion. The plurality of engagement elements may be configured so as to provide the variable depth of frame.

The engagement elements may be fully or partially concealed by the removable retainer. The removable retainer may be configured to assist retaining the engagement elements together.

Alternatively, the glazing system may comprise interior and exterior frame portions that couple with one another via a slip joint, or the like. In such examples, the exterior frame portion may additionally comprise a bonding retainer, such as a grooved recess, configured to permit the exterior frame portion to be held in position during curing or the like of bonding adhesive. The grooved recess may be generally U-shaped, and may comprise an obliquely-formed recess. The recess may be configured for use with removable clips or other retaining means to hold the frame portion in place during bonding.

The system (e.g. the interior frame portions) may comprise first and second interior members. The interior members may serve additionally to define the interior of the frame within the vehicle.

The first interior frame member may be mountable with the vehicle (e.g. with the waist rail, cant rail, etc.). The first interior member may comprise a grooved slot at which the member can be screwed, or otherwise affixed, to the vehicle (e.g. to the waist rail).

The first interior member may comprise retaining clips that interoperate with complementary clips on the second interior member. The second interior member may be removably attachable to the first interior member. When coupled or otherwise attached together, the first and second interior members may provide a contiguous interior profile or surface of the system. The contiguous surface may also be provided additionally by the retaining member, when in situ.

The interior frame portion may be configured to hold and retain interior trim or decor with vehicle, when in position. The second interior member of the interior frame portion may be configured, when coupled to the first interior member, to hold and retain interior trim or decor with vehicle.

The system may be configured such that, when clipped or otherwise attached to the first interior member, the second interior member forms an interference fit with interior trim so as to assist with retaining that trim in place. The second interior member may be removable from the first interior member to allows the trim to be replaced (e.g. in the event of damage, or refurbishment).

The frame may comprise one or more adhesion regions, configured to allow the frame to be adhered to a passenger service vehicle (e.g. adhered to a waist rail, cant rail, pillar, or the like). The adhesion region may be provided with the exterior frame portion, and may be configured to allow the exterior frame portion to be adhered to a vehicle.

The system may comprise one or more profiled rails (e.g. waist rails), which may be obliquely profiled, for use with an exterior frame portion. Such profiled rails may allow for a flush overall appearance of the exterior frame and body panelling of the vehicle, in use. The/each profiled rail may be configured such that a region (e.g. a region corresponding to the adhesion region of the frame) is recessed or inward of the exterior of the rail. The system may comprise one or profiled body panels, configured in complementary manner with the profiled rail.

In some examples, the interior frame portion may be configured to mount between at least two exterior frame portion (e.g. across the pillar). In such examples, a common interior frame portion may be used with the frames of two glazing panels.

The/each frame may comprise a drainage aperture, defined by the frame. The drainage aperture may be configured to allow fluids, such as water, trapped within the frame, to be removed.

The frame/each (e.g. the interior and exterior frame portions) may be configured as one or more extrusions. Features provided on the frames (e.g. the frame retainer, frame portions, etc.) may be provided by extrusion. Such a configuration may allow for ease of manufacture. The frame portions may comprise metal, such as aluminium. The frame portions may comprise plastic, such as UPVC. The frame portions may not be self-supporting (e.g. without comprising a glazing panel, or when not attached with a vehicle). In other words, the frame may not be able to support its weight, without have a glazing panel retained with the frame.

The removable retainer may be configured as one or more extrusions. The seal may be configured as one or more extrusions.

The system may comprise one or more glazing panels, retained with the frames. The system may be configured for use with main glazing of a passenger service vehicle (e.g. along a side of the vehicle).

The system may be configured such that the removable retainer mounts to a glazing panel directly (i.e. not onto sacrificial glazing, or the like).

According to a second aspect of the invention there is provided a glazing system for a passenger service vehicle, comprising:
a glazing frame configured to attach to a passenger service vehicle; the glazing frame comprising a glazing mount extending inwardly along some or all of the frame, and configured to associate a glazing panel with the frame; and
a removably retainer configured to engage with the frame, and to retain a glazing panel against the mount.

The glazing frame may comprise a plurality of frame portions or sections, each configured to attach to a vehicle.

According to a third aspect of the invention there is provided a glazing system comprising one or more exterior frame portions, and one or more interior frame portions, the exterior and interior frame portions configured to engage with an exterior and an interior of a passenger service vehicle respectively, each portion further configured to operatively engage together to as to retain the frame on the passenger service vehicle.

Each portion may be configured to operatively engage together to as to retain the frame on a rail, such as a waist or cant rail, of a vehicle.

The frame portions may comprise complementary engagement elements, configured to retain one portion of the frame to the other. The frame portions may comprise complementary recesses and protrusions, configured to engage and retain the frame portions together. A retained exterior frame portion and interior frame portion may provide a frame depth. The engagement elements may be configured to allow for a variable frame depth.

One of the interior frame portion or exterior frame portion may comprise a plurality of engagement elements, configured to engage with a complementary element on one of the exterior frame portion or interior frame portion. The plurality of engagement elements may be configured so as to provide the variable depth of frame.

The interior frame portion may comprise one or more interior frame elements. Each interior frame element may be configured as a clip, or the like.

According to a fourth aspect of the invention, there is provided a passenger service vehicle comprising a glazing system according to any of the features of the first, second or third aspects.

According to a fifth aspect of the invention, there is provided a method according to claim 15.

The method may comprise replacing the removable retainer so as to engage between a frame retainer of the frame and the glazing panel (e.g. in an interference manner) in order to retain, or urge and retain, the glazing panel against the mount.

The method may comprise using a removal element of the removable retainer to remove the retainer from the frame. The removal element may be operable by hand. The method may comprise removing and replacing a plurality of removable retainers (e.g. four). The removable retainers may be configured as strips.

The method may comprise associating the glazing panel with a seal, which in turn associates the glazing panel with the mount/frame. The method may comprise removing and/or replacing the seal, and then associating the glazing panel with the frame.

The method may comprise removing a secondary retainer to allow for installation or replacement of a glazing panel on a passenger service vehicle, such a secondary retainer configured to additionally retain a glazing panel against the mount.

The method may comprise unscrewing, or the like, the secondary retainer from the frame. The method may comprise removing the removable retainer to reveal the one or more secondary retainers, and then removing the secondary retainer(s). The method may comprise associating a glazing panel with the frame, and then screwing, bolting, affixing, or the like, the secondary retainer to the frame in order to retain the frame. The method may then comprise replacing the removable retainer to so as to conceal the secondary retainer, and so retain the glazing.

The method may additionally comprise removing an existing glazing panel to be replaced, before associating a replacement glazing panel with the frame.

The method may comprise replacing a glazing panel from the interior of the vehicle.

According to a sixth aspect of the invention, there is a method of installing a glazing system, comprising:
positioning an exterior frame portion of a glazing frame at an exterior of a passenger service vehicle,
positioning an interior frame portion of the glazing frame at an interior of the passenger service vehicle,
engaging the exterior frame portion together with the interior frame portion, and retaining the glazing frame on the passenger service vehicle.

The method may comprise operatively engaging the exterior frame portion together with the interior frame portion.

The method may comprise engage the exterior frame portion together with the interior frame portion so as to provide a contiguous interior surface, extending from the exterior portion to the interior portion.

The method may comprise adhering the exterior frame portion to the passenger service vehicle. The method may comprise providing adhesive to the exterior frame portion or the passenger service vehicle, and then operatively engaging the interior frame portion in order to retain the frame on the vehicle.

The frame portions may comprise complementary engagement elements, configured to retain one portion of the frame to the other. The frame portions may comprise complementary recesses and protrusions, configured to engage and retain the frame portions together. A retained exterior frame portion and interior frame portion may provide a frame depth. The engagement elements may be configured to allow for a variable frame depth.

One of the interior frame portion or exterior frame portion may comprise a plurality of engagement elements, configured to engage with a complementary element on one of the exterior frame portion or interior frame portion. The plurality of engagement elements may be configured so as to provide the variable depth of frame.

The exterior frame portion may comprise a glazing panel.

It will be appreciated that one or more embodiments/aspects may be useful with in providing glazing systems for passenger service vehicles.

The above summary is intended to be merely exemplary and non-limiting.

### Brief Description of the Figures

A description is now given, by way of example only, with reference to the accompanying drawings, in which:-
Figure 1 shows a perspective view of a passenger service vehicle,
Figure 2a shows a cross-section of an example of a portion of a glazing system, and
Figures 2b and 2c show perspective view of the exemplary glazing system,
Figures 3a and 3b shows further examples of the glazing system of Figure 2.
Figures 4a-4f show an alternative example of portions of a glazing system; and
Figure 5 shows an interior of a vehicle comprising the glazing system of Figures 4a-4f.

### Description of Specific Embodiments

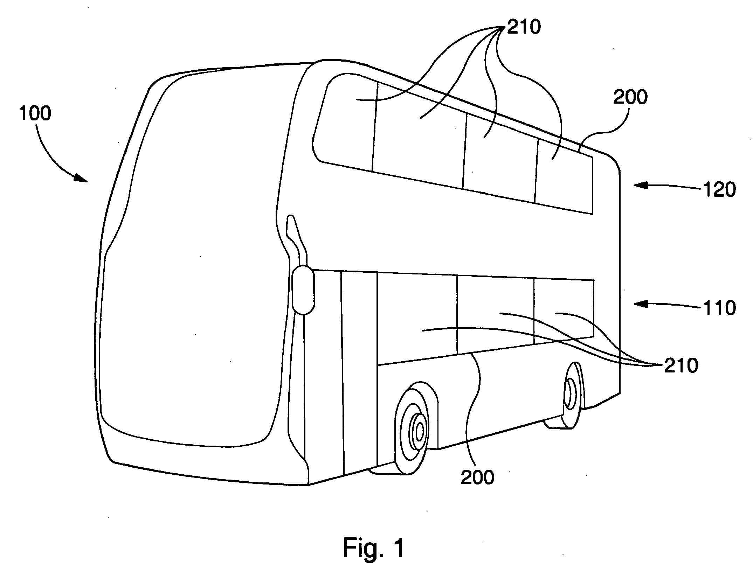

Figure 1 shows a perspective representation of an exemplary passenger service vehicle 100, which, by way of example only, is shown as a vehicle 100 having both a lower passenger deck 110 and an upper passenger deck 120. Such vehicles 100 are commonly referred to as double-deck vehicles 100.

The vehicle 100 comprises main glazing 200 provided along each side of the vehicle, on both the upper and lower decks 110, 120. The main glazing 200 comprises a plurality of glazing panels 210 (e.g. glass panels). During manufacture, these glazing panels must be assembled with the vehicle. In addition, from time to time, these glazing panels 210 require replacement, for example, due to damage.

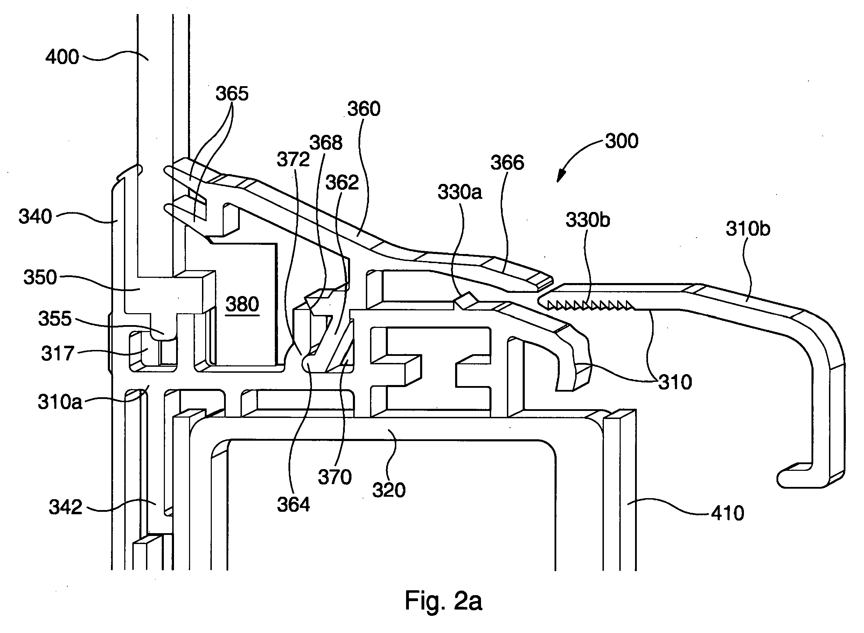

Figure 2a shows a cross-section of a portion of an exemplary glazing system 300 for the passenger service vehicle 100. The glazing system 300 comprises a glazing frame 310 that is configured to attach to a passenger service vehicle 100. In this particular example, the glazing frame 310 comprises an exterior frame portion 310a, and an interior frame portion 310b. As will be appreciated in light of the following described embodiments, further examples may not use exterior and interior frame portions 310a, 310b, but may be provided as only a single portion, or even only an exterior portion.

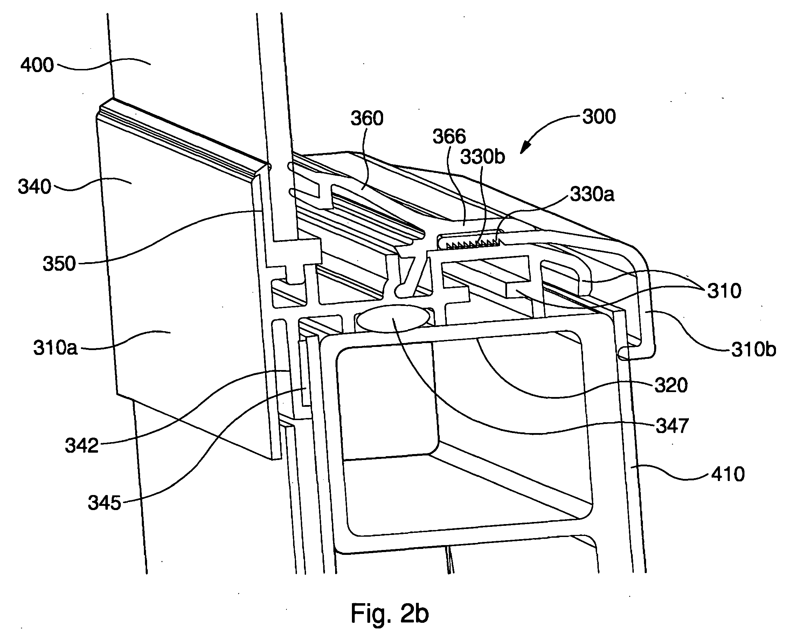

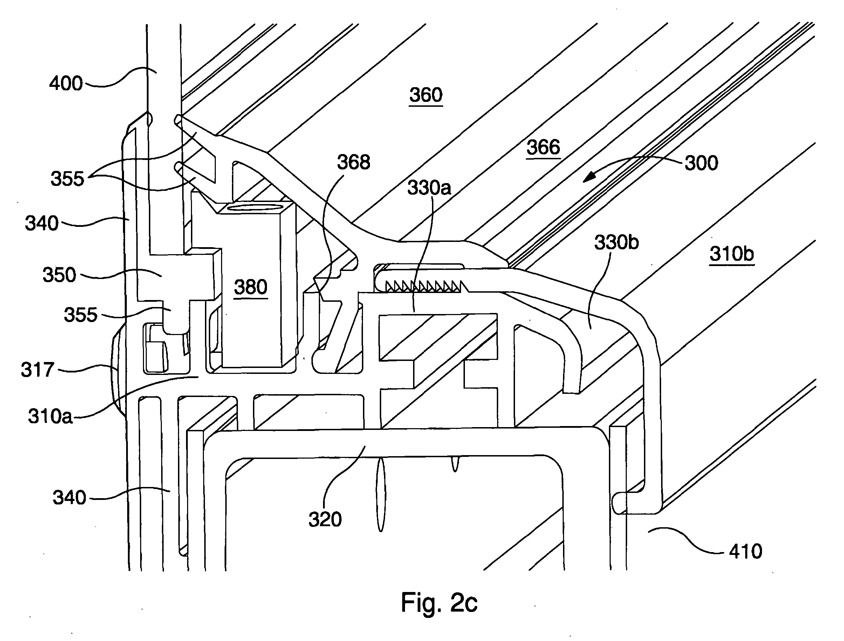

The exterior and interior frame portions 310a, 310b are configured to engage with the exterior and interior of the passenger service vehicle 100 respectively, as is shown in Figures 2b and 2c, and as will be described in further detail below. Here, each portion 310a, 310b of the frame 310 is configured to operatively engage together so as to retain the frame 310 at an intended window aperture of the passenger service vehicle 100. For example, the frame 310 may be retained on a waist rail, or the like (as is exemplified as 320 in Figures 2a, 2b and 2c). Here, the interior frame portion 310b extends with, and engages with, the exterior frame portion 310a along the length of the exterior frame portion 310a. Of course, in further examples, the interior frame portion 310b may comprise one or more interior frame portion elements (i.e. discrete elements, such as clips), configured to engage with particular regions of the exterior frame portion 310a. In other words, while in the example shown the interior frame portion 310b could be provided by a single extrusion, configured to extend along the length of the frame 310, in further examples, the interior frame portion 310b may be provided by a plurality of discrete frame portions. In some cases, each of those discrete portions may be spaced from one another along the length of the frame. A single interior frame portion 310b may be more aesthetically pleasing, and easier and quicker to assemble, while discrete interior frame portions 301 b may reduce overall weight and material.

Further, when in use, the interior frame portion 310b can hold and retain interior trim 410 with vehicle 100. In some cases, the system 300 may be configured such that, when coupled to or otherwise attached to the exterior frame portion 310a, the interior frame portion 310b forms an interference fit with the interior trim 410 so as to assist with retaining that trim 410 in place. In those, and similar examples, subsequent removal of the interior frame portion may allow replacement of the interior trim.

In this particular example, the frame portions 310a, 310b comprise complementary engagement elements 330a, 330b that are configured to engage and retain the frame portions 310a, 310b together. In other examples, as will be explained in more detail below, that need not be the case. However, here, the elements 330a, 330b, as shown in Figure 2a are provided as recesses 330b and a protrusion 330a (e.g. in a ratchet-style arrangement). Of course, in alternative embodiments, alternative or additional engagement elements 330a, 330b may be used.

The frame 310, and in this case the exterior frame portion 310a, further comprises an adhesion region 342. The adhesion region 342 is configured to allow the frame 310 to be adhered to the passenger service vehicle 100. While for the purposes of the following description, the adhesion region 342 is used with adhesive, it will be appreciated that that need not be the case in all examples. For instance, the adhesion region 342 may be configured to mount or otherwise attach the exterior frame portion 310a with the vehicle 100, without using adhesive (e.g. adhere using screws, bolts, or other such fixings). A skilled reader will readily be able to implement those further embodiments accordingly.

However, as is shown in Figure 2b, the frame 310 of this example can be adhered (and bonded) to the vehicle 100 using an adhesive 345 (e.g. epoxy, etc.). The frame 310 may, of course, be adhered or otherwise affixed to the vehicle at further locations (e.g. see 347 in Figure 2b, for example).

The frame 310 shown in Figure 2 also comprises a drainage aperture 317, which is defined by the frame 310. The drainage aperture 317 allows fluids, such as water, which may be trapped within the frame 310 (e.g. in use) to be removed.

The glazing frame 310 further comprises a glazing mount 340. The glazing mount extends (e.g. inwardly) along some or all of the frame 310, and is configured to allow for a glazing panel (shown as 400) to be associated with the frame 310. When assembled, the frame 310 may comprise a glazing mount that extends around the resultant aperture defined by the frame.

In this particular example, the system 300 further comprises a seal 350, positioned at the glazing mount 340, such that glazing is retained against the seal 350. Here, the seal 350 has a seal element 355, configured to allow for ease of locating of the seal 350 with the frame 310. In this example, the seal 350 is removable/replaceable from the frame 310. Of course, in some examples, no seal 350 may be provided with the frame 310. For example, in some embodiments, any replacement glazing panel itself may comprise a seal configured for association with the glazing mount 340.

The frame 310 further comprises a removable retainer 360, which is configured to engage with the frame 310, and to retain a glazing panel 400 against the frame (or mount 340). In this particular example, the retainer 360 is provided as a removable strip (shown, for example, in Figure 2b and 2c). In other words, and in a similar manner to the interior frame portion 310b, the retainer 360 can extend along a length of the frame in a strip-like manner.

The removable retainer 360 is configured to engage with a frame retainer 370 provided on the frame 310, such that, in this example, the removable retainer 360 is engaged between the frame retainer 370 and the glazing panel 400 in an interference manner so as to retain, or urge and retain, the glazing panel 400 against the mount 340. In this case, the removable retainer 360 can be considered to be resiliently deformable. Of course, in some examples, only those portions that engage with the frame or glazing may be deformable for ease of use, while the remainder of the retainer may be comparably non-deformable. Such a configuration may allow for ease of use.

It will be appreciated that the removable retainer is configured such that is able to sufficiently hold and retain a glazing panel against the frame, when the vehicle is in every day use. In the example described, the system is configured such that the removable retainer is configured to directly mount with a glazing panel, which may be a single glazing panel (e.g. rather than indirectly, via secondary glazing, or a sacrificial interior or glazing).

As can been seen in Figure 2a, in this example, the frame retainer 370 is essentially provided as a recess, such that a complementary retaining rib or member 362 of the removable retainer 360 locates, and engages, with the recessed frame retainer 370. Here, the removable retainer 370 additionally comprises a locating element 364, configured to allow for ease of location of the removable retainer 360 with the frame 310 (e.g. for complementary location with a corresponding recess). In this example, the locating element 364 is provided as a rib or protrusion corresponding to a recess 372 of the frame retainer 370.

In this particular embodiment, the removable retainer 360 comprises two fins 365, configured to engage (e.g. flexibly engage) with the glazing panel 400. Both fins 365 are configured to be substantially parallel. Here, the fins 356 provide an interference engagement with glazing 400, when in use. Providing a plurality of fins allows for a greater retaining force to be applied to the glazing 400.

Here, the removable retainer 360 further comprises a removal element 366, configured to allow a user to remove the retainer 360 from the frame 310. The removal element 366 is arranged such that it can operable by hand (e.g. by pulling). In use, and as is shown for example in Figure 2b and 2c, the removal element 366 can, in some cases, conceal, and in some further cases assist with maintaining, the engagement elements 330 of the interior and exterior frame portions 310a, 310b.

In this example, the removable retainer 360 further comprises a removal pivot 368, which pivots upon the frame 310 to assist with removal (as well as placement). Here, the pivot 368 also cooperates with the removal element 366 in order to assist with removal of the removable retainer 360 from the frame 310. In other words, actuation of the removal element 366 may urge the removable retainer 360 from the frame 310, causing the removal pivot 368 to pivot on the frame 310, and assist with removal of the retainer 360 from the frame 310.

The glazing system 300 further comprises one or more secondary retainers 380, which are additionally configured to retain a glazing panel 400 against the mount 340 (e.g. in addition to the removable retainer 360). Here, the frame 310 comprises a plurality of discrete secondary retainers 380, which are positioned an intervals along the frame 310, one of which is shown in Figures 2b and 2c. Each secondary retainer 380 is specifically configured to affix to the frame, for example, by screw, bolt or the like, which may, in some cases, require a specialised tool to remove. As such, in many cases, the secondary retainer 380 may be considered not to be removable by hand. As can be seen in Figure 2, the secondary retainer 380 is essentially concealed by the removable retainer 260, when in use (e.g. concealed from a passenger).

Having the secondary retainers 380 concealed from the passengers may help mitigate the risk of a passenger considering, and acting upon, any attempted removal of the window. In addition, have the removable retainer in the manner shown may be easier to clean, and more aesthetically pleasing. However, in further examples, the secondary retainers 380 may be apparent, or may be comprised with the removable retainer 280. For example, the removable retainer 280 may comprise fixings, such as screws, or the like, to affix the retainer to the frame. In those cases, any secondary retainer (e.g. fixing) may first be removed (e.g. using a special tool), and then the removable retainer may be removed; in the same manner as above.

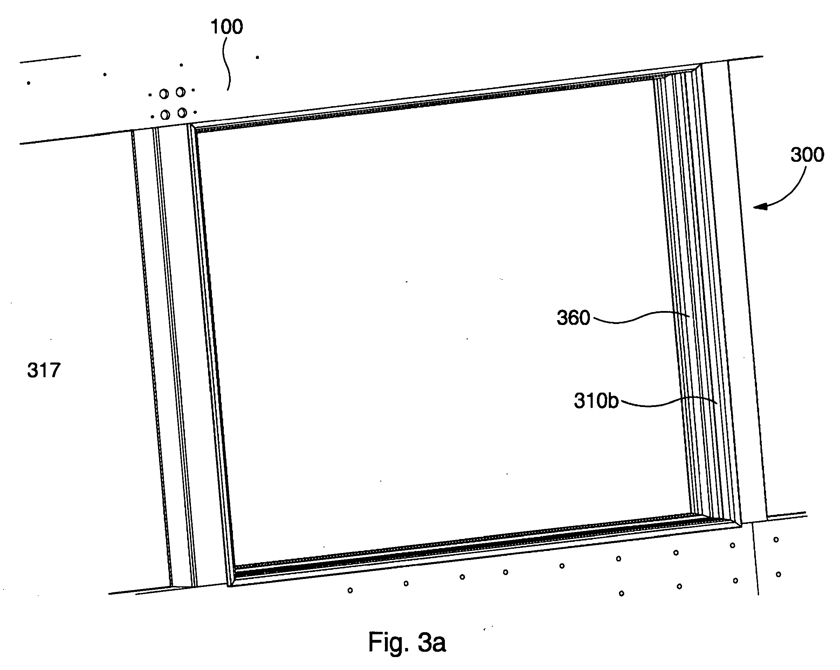

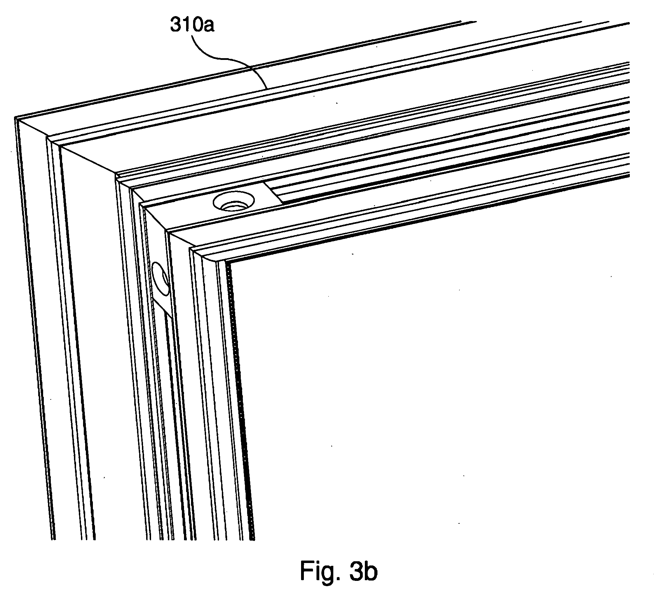

In this particular example, the frame 310 (e.g. the interior and exterior frame portions 310a, 310b) are provided by extrusions, such as aluminium or plastic extrusions. In some example, the extrusions can be mounted together to provide the overall frame 310, which can be mounted to the vehicle 100 as is shown in Figure 3a and Figure 3b, for example. Of course, in other examples, the frame may be assembled on the vehicle in sections (i.e. rather than mounting a portal-style frame to the vehicle 100).

In this particular case, the frame 310 is configured such that need not be self-supporting (e.g. without comprising a glazing panel 400). In other words, the glazing panel 400 may provide the rigidity of the frame 310.

During assembly, manufacture, or repair of the passenger service vehicle 100, the glazing system 300 of Figures 2 and 3 can be installed by positioning the exterior frame portion 310a at the exterior of a passenger service vehicle 100, and positioning the interior frame portion 310b from the interior of vehicle 100. In some cases, the exterior frame portion 310a may be adhered or otherwise affixed to the vehicle 100 (e.g., using the adhesion portion 340). In this example, both frame portions 310a, 310b can be brought together (e.g. across an intended window aperture) to operatively engage, and retain the glazing system on the passenger service vehicle 100. In some cases, these may operatively engage not to retain fully the frame 310, but to serve to maintain the frame 310 to the vehicle while any adhesive (e.g. 345, 347) bonds the frame 310 to the vehicle 100. Providing a frame 310 in such a manner may obviate the need to provide additional support to the frame 310 as the applied adhesive cures (e.g. using external block to press and hold the frame 310 in position as the adhesive cures).

It will also be appreciated that, after the frame 310 has been attached to vehicle 100, the vehicle 100 effectively provides the structural support for the frame (and glazing panel 400). Therefore, the frame 310 may be installed with a glazing panel 400, such that the glazing panel 400 provides the support for the frame 310 when the frame 310 is not attached to the vehicle 100, and then subsequently (e.g. if the glazing panel is removed), the structure of the vehicle supports the frame 310. In such a way, a lighter weight frame 310 can be used, which can reduce manufactures needs, as well as improve the efficiency of any vehicle.

Furthermore, it will be appreciated that using the exterior frame portion 310a and interior frame portion 310b in the manner described, for example, allows for alternative frame depths to be accommodated, as so allow for ease of manufacturing. In other words, a standard frame may be used with different vehicles 100, whereby a differing thickness of the aperture can be accommodated by using a plurality of engagement elements 330a, 330b, such as a ratchet arrangement.

If, during the lifespan of the vehicle 100, a glazing panel 400 requires installation or replacement, then firstly, the removable retainer 360 - which is engaged with a glazing frame - can be pulled from the frame 310, for example, using the removal element 360, and/or pivot 368, etc. In some embodiments, for example, those using secondary retainers 380, any existing glazing panel 400 will remain retained against the frame 310 even in the event of accidental removal of the removable retainer 360. In which case, those secondary retainers 380 can then also be removed in order to remove an existing glazing panel 400. In some cases, a specialised tool may be required in order to remove those secondary retainers 380, so as to avoid accidental removal by a passenger.

Subsequently, a new glazing panel 400 can be associated with the glazing mount (e.g. via a seal); and the secondary retainers 380 and removable retainer 360 can be replaced so as to engage the removable retainer 360 with the frame and retain the glazing panel against the mount.

It will be appreciated that due to the configuration of the described glazing system 300, any replacement glazing need only be mounted from the inside of the vehicle 100. As such, after initial manufacture, an operator of the vehicle 100 may be able to readily replace the glazing (e.g. after damage), without the need for specialise platforms, or the like, which may otherwise be required in order to reach the upper heights of the vehicle. In such a manner, using the described glazing system may minimise the time that any vehicle remains out of service.

It will further be appreciated that the use of the removable retainer 360, in the manner disclosed, allows for the glazing to be replaced without necessarily disrupting the interior finish of the vehicle. Therefore, again, an operator of the vehicle can quickly and effectively replace the glazing.

In addition to the above benefits, the manner is which the system 300 is configured, particularly with respect to the glazing mount 340, inhibits the possibility of a glazing panel 400 being forced outwardly of the vehicle by a passenger inside the vehicle (e.g. a disruptive passenger). In such a way, the operational safety of the vehicle 100 can be improved.

While in the above described example the glazing system 300 comprises interior and exterior frame portions 310a, 310b that operatively couple with one another, that need not always be the case. Further, while in the example shown in Figure 3, the frame 310 may be considered to provide a portal-style frame, nevertheless in further embodiments, the frame of the glazing system 300 may be provided from horizontal sections (e.g. cant and waist rail sections), and vertical sections (e.g. pillar sections). Such sections or portions may be provided from different extrusions that, when assembled, serve to form one or more frames for glazing 400.

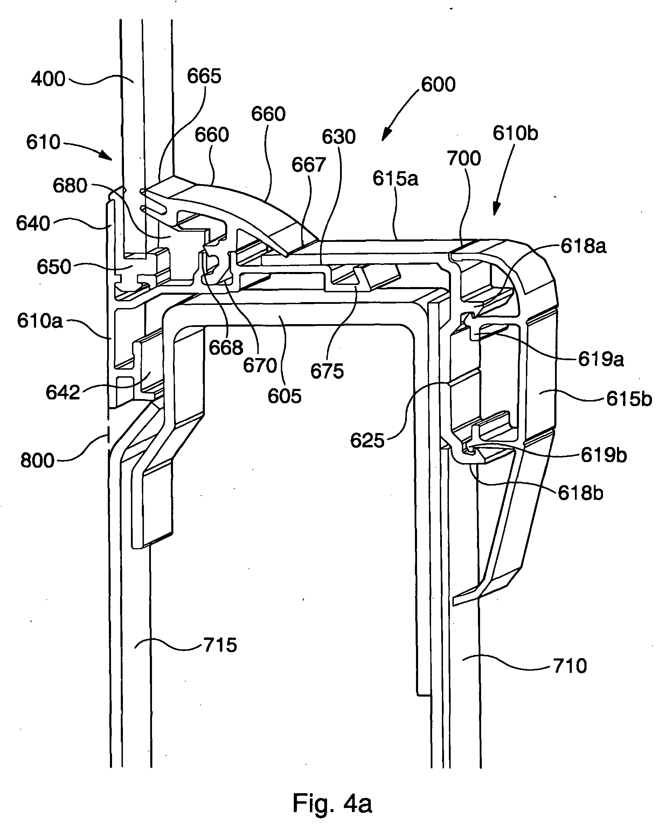

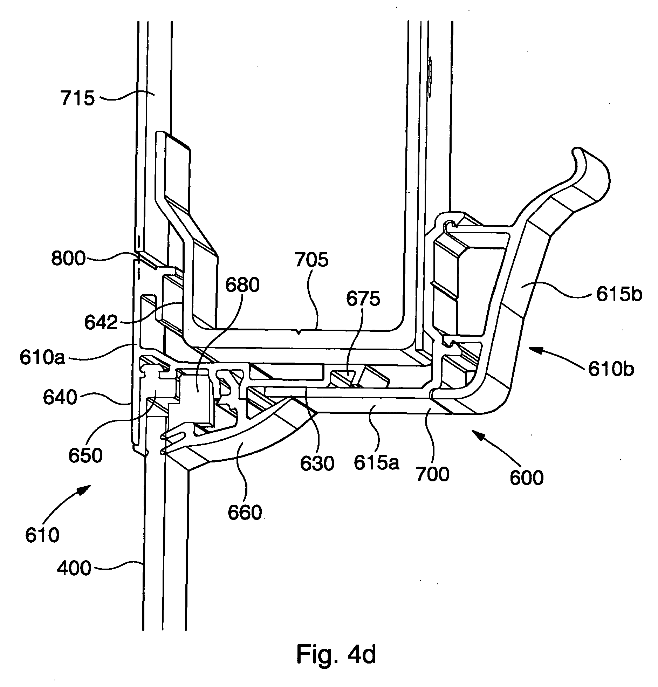

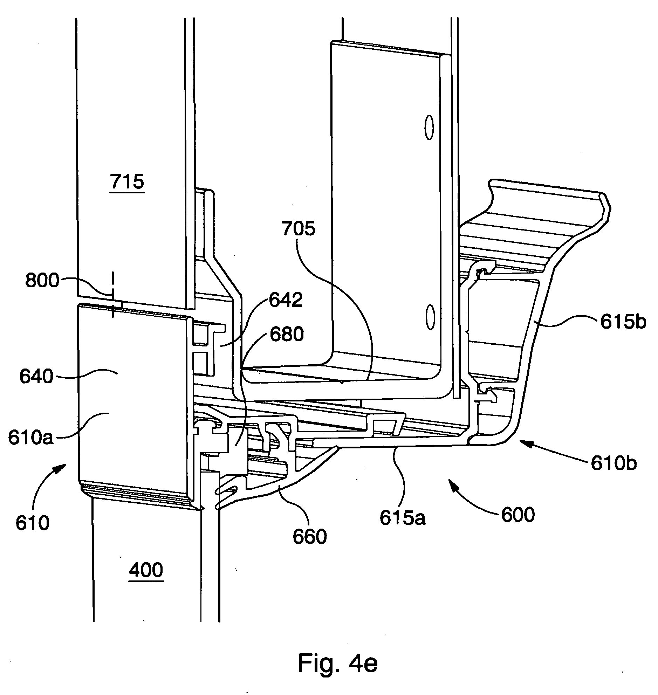

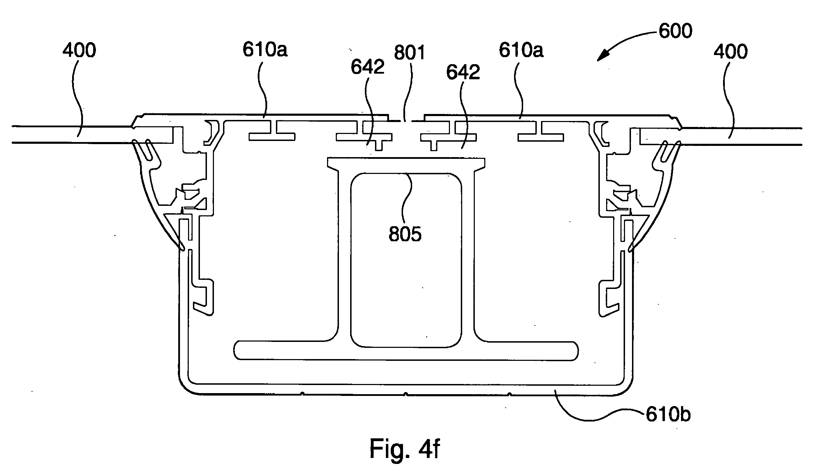

Consider now the glazing system 600 of Figures 4a to 4f, which is similar to that described in relation to Figures 2 and 3. These figures show, essentially as a cross-section, a further embodiment of the exemplary glazing system 600 for the passenger service vehicles 100. Again, the system 600 is shown mounted (albeit without showing adhesive, or the like) with various sections of the passenger service vehicle 100. Figures 4a to 4c show the system 600 mounted at a waist rail 605 of the vehicle 100, while Figures 4d and 4e show the system mounted at a cant rail 705 of the vehicle. A skilled reader will appreciate that the waist rail 605 and cant rail 705 sections can be considered to be those structural frames of the vehicle 100 that extends along some or all each side of the vehicle 100. Such rails 605, 705 may be provided on both single and double-deck vehicles 100. Figure 4f shows a cross section of the system 600 at a one structural pillar 805 (e.g. a pillar that extends between waist and cant rail of the vehicle 100). In this example, the pillars 805 can serve to define the apertures at which the windows of the vehicle 100 are provided.

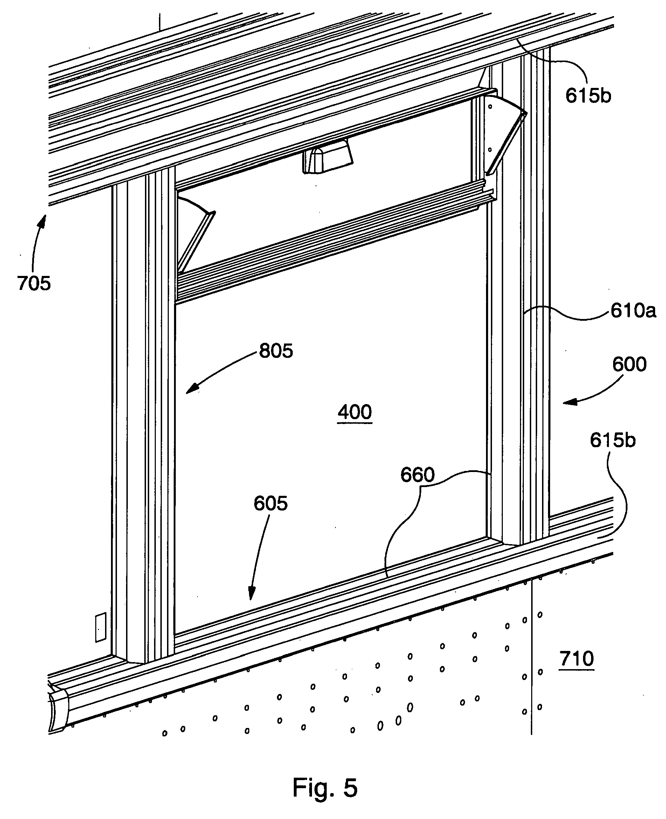

Again, the glazing system 600 can be considered to comprise a glazing frame 610, which serves to support a glazing panel 400. The frame 610 again can be considered to have interior and exterior frame portions 610a, 610b, that are configured to attach to a passenger service vehicle 100. However, it will be appreciated that in view of the following description that the glazing system 600 may in some examples comprise only exterior frame portions 610a. Further, in this example, and as will be explained, the frame 610, and in particular the interior frame portions, 610b are generally formed in horizontal and/or vertical sections which serve to define windows of the vehicle 100, rather than providing a portal frame, as such (see Figure 5, for example). Nevertheless, those portions or sections can still be considered to provide a glazing frame 610.

With reference to Figures 4a to 4e, the interior frame portion 610b associated with the cant and waist rail sections 605, 705 of the system 600 comprise first and second interior members 615a, 615b. The interior members 615a, 615b serve additionally to define the interior of the frame 610 within the vehicle 100. The first interior frame member 615a is formed generally as an "L" shape, and is mountable with the waist rail 605 (or cant rail 705) via a grooved slot 625 at which the member 615a can be screwed, or otherwise affixed, to that rail 605, 705. Providing such a grooved slot 625 along the length of the first interior member 615a allows for ease of manufacture, yet that that member 615a can be affixed at appropriate locations on the vehicle 100. Of course, other means for affixing the first interior member 615a may be used.

As is shown, the first interior member 615a comprises retaining clips 618a, 618b, that interoperate with complementary clips 619a, 619b on the second interior member 615b. As such, the second interior member 615b can be removably attached to the first interior member 615a. When coupled together, the first and second interior members 615a, 615b provide a contiguous interior profile or surface 700 of the system 600. In such a way, a pleasing aesthetic interior finish of the system 600 can readily be provided.

In addition, the second interior member 615b is further configured, when coupled to the first interior member 615a, to hold and retain interior trim or decor 710 with vehicle 100. In some cases, the system 600 may be configured such that, when clipped or otherwise attached to the first interior member 615a, the second interior member 615b forms an interference fit with the interior trim 710 so as to assist in retaining that trim 710 in position. The second interior member 615b can then be removed from the first interior member 615b (e.g. by pulling, or levering), which in turn allows the trim 710 to be replaced (e.g. in the event of damage, or refurbishment). In such a way, the trim 710 can be replaced without unduly affecting the system 600. While in this example, complementary clips 618a, 618b, 619a, 619b have been described, it will be appreciated that other means of releasably attaching the first and second interior members 615a, 615b may be used. In addition, and as is shown in Figure 4d and 4e, the second interior member 615b may be configured, when at the cant rail 705, to form a contiguous interior surface with a roof portion (not shown).

In this example, and unlike the example above, each portion 610a, 610b of the frame 610 engages together via a slip joint 630 (i.e. rather than a ratchet arrangement). In such a way, the system 600 can again accommodate varying dimensions of rail 605, 705. As such, the same glazing system 600 may be used on numerous different vehicles 100, thus potentially reducing overall manufacturing costs and/or providing ease of manufacture.

Here, the exterior frame portion 610a comprises an adhesion region 642, in a similar manner to that described above. The adhesion region 642 again is configured to allow the frame 610 to be adhered to the passenger service vehicle 100 (e.g. the waist rail 605). Bonding of the exterior frame portion 610a to the waist rail 605 or cant rail 705 can occur at the adhesion region 642.

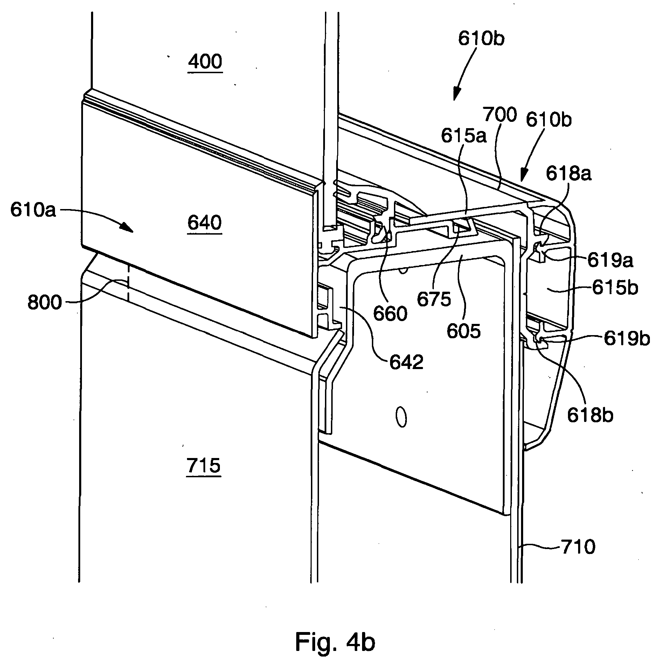

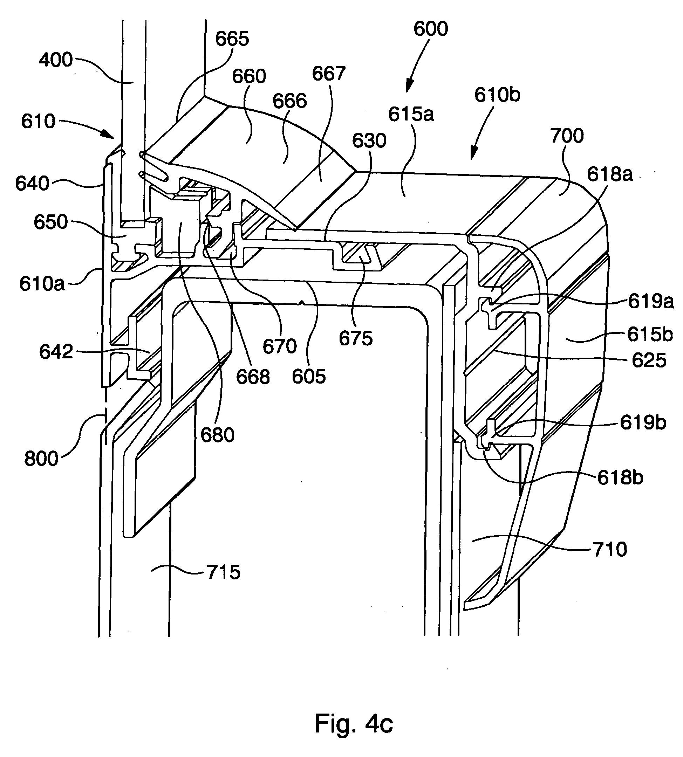

In this particular example, and as is shown in Figures 4a, 4b and 4c, the waist rail 605 is additionally profiled so as to allow for a flush overall appearance of the exterior frame 610b and body panelling 715 of the vehicle 100, in use (flush profile is shown at dashed 800). Here, the waist rail 605 is configured such that a region corresponding to the adhesion region 642 (e.g. a complementary region) is recessed, or inward, of the exterior of the waist rail 605. In such a manner, when assembled, the exterior frame portion 610 can be flush with body panelling 715. Being able to provide a flush exterior not only improves the aesthetic look of the vehicle 100, but also improves the ease with which the vehicle can be maintained (e.g. cleaned).

In this example of the glazing system 600 shown in Figures 4a-4c, the body panelling 715 is also profiled in a complementary manner with the waist rail 605. This maintains the overall flush appearance of the exterior frame 610b and body panelling, but mitigates or eliminates the possibility of the water entering behind the panelling 715, as water runs down from the glazing 400. Of course, in some examples, the panelling 715 at the waist rail 605 may not profiled inwardly, and may be entirely flush with the exterior frame portion 610a. In those examples, additional bonding agent, or filler, may be provided behind the panelling 715 so as to mitigate water ingress. Further, it will be appreciated that while water may run from the glazing 400 to the body panelling 715 at the waist rail 605 section, nevertheless the same may not be true at the cant rail 705 section (as shown in Figures 4d and 4e), in which the body panelling 715 need not be profiled in the same manner.

Figure 4f shows a cross-section of the system 600 provided at the pillar section 805. Here, two exterior frame portions 610a meet at the pillar 805. Adhesive, bonding, or filler, can be provided at the adhesion region 642 of each in order to provide a contiguous exterior surface (shown at dashed 801). Further, the interior frame portion 610b in this example is configured such that it mounts between the two exterior frame portions 610a, across the pillar 805 (see also Figure 5). As such, an aesthetically pleasing interior can be provided, and fewer parts are required, hence reducing manufacturing time and costs.

In the examples shown in Figure 4a-4f, the exterior frame portion 610a additionally comprises a generally U-shaped grooved recess 675, which is provided on an interior side of the frame portion 610a. The grooved recess 675 extends along some or all of the exterior frame portion 610b, and is configured to allow the frame portion 610a to be maintained with the vehicle 100 during adhering of the frame portion 610a to the waist rail 605 (or cant rail 705, or pillar 805). Removable clips or other retaining means can be used with the grooved recess 675 to hold the frame portion 610a in place during bonding, or the like. In the example shown, the U-shaped groove 675 comprises an obliquely-formed recess, which assists with any retention.

In the same manner as the embodiments described above, the system 600 comprises a glazing mount 640, which is configured to allow for the glazing panel 400 to be associated with the frame 610. Again, a seal 650 is provided such that glazing 400 is retained against the seal 650. The system 600 further comprises a removable retainer 660, which is configured to engage with the frame 610, and to retain the glazing panel 400 against the frame (or mount 640).

As before, the retainer 660 is provided as a removable strip, which in the example shown extends along the length of the frame 610 in a strip-like manner. Here, the removable retainer 660 is configured to engage with a frame retainer 670 in a similar manner to that described above (e.g. fins 665, removal element 666, removal pivot 668 etc.). However, additionally, the retainer 660 comprising an interior fin 667, which forms in interference fit with the interior frame portion 610b. In such a manner, the contiguous surface 700 of the interior is maintained. Nevertheless, again, the retainer 660 can be removed and re-introduced a similar manner to that described in relation to Figure 2. In some examples, the interior frame portion 610a may comprise a complementary groove, or the like, to assist with locating and retaining of the retainer 660.

Again, the glazing system 600 further comprises one or more secondary retainers 680, which are additionally configured to retain a glazing panel 400 against the mount 640 (e.g. in addition to the removable retainer 660). The secondary retainers again are essentially concealed by the removable retainer 660, when in use (e.g. concealed from a passenger).

Figure 5 shows an example of the glazing system 600 of Figures 4a-4f at the interior of the vehicle. As can be seen, the interior frame portions 610b extend along the length of the vehicle. In some examples, those frame portions may be apportioned so as to allow for ease of replacement.

During assembly and manufacture of the passenger service vehicle 100, the glazing system 600 of Figures 4 and 5 can be installed by positioning the exterior frame portions 610a at the exterior of a passenger service vehicle 100, and mounting thereto. Subsequently, the interior frame portion 610b can be positioned in place from the interior of vehicle 100. After the frame 610 has been attached to vehicle 100, the vehicle 100 can effectively provide the structural support for the frame (and glazing panel 400). In such a way, a lighter weight frame 610 can be used, which can reduce manufactures needs, as well as improve the efficiency of any vehicle.

In the same manner as before, a glazing panel 400 can be installed or replaced by firstly removing the removable retainer 660 - which is engaged with a glazing frame. Then, the secondary retainers 680 can be removed. Subsequently, a new glazing panel 400 can be associated with the glazing mount (e.g. via a seal); and the secondary retainers 680 and removable retainer 660 can be replaced so as to engage the removable retainer 660 with the frame and retain the glazing panel against the mount. This replacement can take place from inside the vehicle 100. As such, there is no requirement to provide external scaffolding or platforms in order to replace the glazing 400 (e.g. on double-deck vehicles). In addition, changes to the interior trim 710 can readily be achieved by removing the second interior member 615b.

Providing such glazing systems 300, 600 allows for the quick and easy replacement of glazing panels 400 for passenger service vehicles 100. Such systems 300, 600 provide easy of replacement, similar to a gasket glazing system, with resistance to leaking and improved appearance, similar to an adhesive glazing system. Further, the systems described 300, 600 serve to allow for ease of positioning of glazing within the vehicle (e.g. either during manufacture and/or maintenance), as well as allowing for an aesthetically pleasing interior trim to be provided.

While the above examples described embodiments in relation to twin decks 110, 120, in further examples, the system 300, 600 may be used on single deck vehicles. In addition, while the system 300, 600 has been described in relation to the side glazing, or main glazing, of a vehicle 100, such system may equally be positioned, for example, at the front or rear of the vehicle 100, or used as a glazing system for other vehicles, such as other service vehicles (e.g. other commercially operated vehicles). A skilled reader will readily be able to implement such further embodiments.

It will be appreciated that any of the aforementioned members, frames, surfaces, elements, etc. may have other functions in addition to the mentioned functions, and that these functions may be performed by the same members/frames/surfaces/elements.

It will readily be appreciated that any of the features of the system shown in Figure 4 and 5 (e.g. the first and second interior portions 615a, 615b) may equally be used with any of the features of the system shown in Figures 2 and 3, and vice versa (e.g. the use of the complementary retainers between exterior and interior portions). The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims.

## Claims

1. A glazing system (300, 600) for a passenger service vehicle (100), comprising:
a glazing frame (310, 610) configured to attach to a passenger service vehicle (100), the glazing frame (310, 610) comprising a glazing mount (340, 640) extending inwardly along some or all of the frame (310, 610), and configured to associate a glazing panel (400) with the frame (310, 610);
a removable retainer (360, 660) configured to engage with the frame (310, 610), and to retain a glazing panel (400) against the glazing mount (340, 640), and
one or more secondary retainers (380, 680), being configured to additionally retain a glazing panel (400) against the mount/frame (340/310, 640/610), **characterised in that** the or each secondary retainer (380, 680) is essentially concealed from passengers by the removable retainer (360, 660) when in use.

2. A system according to claim 1, wherein the frame (310, 610) comprises a frame retainer (370, 670), and wherein the removable retainer (360, 660) is configured to engage between the frame retainer (370, 670) and a glazing panel (400) in an interference manner in order to retain, or urge and retain, a glazing panel (400) against the glazing mount (340, 640).

3. A system according to claim 2, wherein the frame retainer (370, 670) is configured as a recess on the frame (310, 610), and the removable retainer (360, 660) comprises a retaining rib (362), configured to locate and engage with the recessed frame retainer (370, 670).

4. A system according to claim 3, wherein the removable retainer (360, 660) additionally comprises a locating element (364) provided with the retaining rib (362), configured to allow for complementary location with a corresponding recess of the frame retainer (370, 670).

5. A system according to any of the claims 2, 3 or 4, wherein the removable retainer (360, 660) comprises a removal pivot (368, 668), configured to cooperate with the frame (310, 610) in order to assist with removal of the removable retainer (360, 680) from the frame (310, 610).

6. A system according to any of the claims 1 to 5, wherein the removable retainer (360, 660) is configured as a removable strip, configured to extend along some or all of the frame (310, 610).

7. A system according to any of the claims 1 to 6, wherein system comprises a frame seal (350, 650), and wherein the removable retainer (360, 660) is configured to engage with the frame (310, 610), and to urge and retain a glazing panel (400) against the frame seal (350, 650), which in turn retains the glazing panel (400) against the mount (340, 640) of the frame (310, 610).

8. A system according to any of the claims 1 to 7, wherein the or each secondary retainer (380, 680) is affixed to the frame (310, 610).

9. A system according to claim 8, wherein one or more strips of removable retainer (360, 660) cover a plurality of discrete secondary retainers (360, 660).

10. A system according to any of the claims 1 to 9, wherein the frame (310, 610) comprises one or more exterior frame portions (310b, 610b), and one or more interior frame portions (310a, 610b), the exterior and interior frame portions configured to attach with exterior and interior regions of a passenger service vehicle (100) respectively, and optionally
wherein the interior frame portions (310a, 610b) comprise first and second interior members, the second interior members being releasably attachable to the first interior member, and wherein the second interior member is configured, when attached, to form an interference fit with replaceable interior trim (410, 710).

11. A system according to any of the claims 1 to 10, wherein the frame comprises an adhesion region (342, 642), configured to allow the frame (310, 610) to be adhered, or otherwise attached, to a passenger service vehicle (100), and optionally,
wherein the system comprises one or more profiled rails, configured such that a region of each rail corresponding to the adhesion region of the frame is recessed or inward of the exterior of the rail.

12. A system according to any of the claim 1 to 11, wherein the frame comprises (310, 610) one or more drainage apertures (317), defined by the frame (310, 610), configured to allow fluids, such as water, trapped within the frame (310, 610), to be removed.

13. A system according to any of the claims 1 to 12:
wherein the frame (310, 610) is configured as one or more extrusions, and/or
wherein the frame (310, 610), when formed, is not self-supporting, and/or
further comprising a glazing panel (400), retained with the frame (310, 610), and/or
wherein the system is configured to form a plurality of windows along a side of a passenger service vehicle (100).

14. A passenger service vehicle (100) comprising a glazing system according to any of the claims 1 to 13.

15. A method of installing or replacing a glazing panel (400) on a passenger service vehicle (100), the method comprising:
removing a removable retainer (360, 660) that is engaged with a glazing frame (310, 610), the removable retainer (360, 660) configured to retain a glazing panel (400) against a glazing mount (340, 640) extending inwardly along some or all of the frame (310, 610), the mount (340, 640) configured to allow for associating a glazing panel (400) with the frame (310, 610);
removing one or more secondary retainers (380, 680), the or each secondary retainer (380, 680) being essentially concealed from passengers by the removable retainer (360, 660) when in use, and being configured to additionally retain a glazing panel (400) against the mount/frame (340/640, 310/610),
associating a glazing panel (400) with the glazing mount (340, 640); and
replacing the or each secondary retainer (380, 690) so as to retain the glazing panel (400) against the mount/frame, and then
replacing the removable retainer (360, 660) so as to essentially conceal the one or more secondary retainers (380, 680) and to engage the removable retainer (360, 660) with the frame (310, 610) and retain the glazing panel (400) against the mount (340, 640).

## Patentansprüche

1. Verglasungssystem (300, 600) für ein Personenbeförderungsfahrzeug (100), umfassend:
einen Verglasungsrahmen (310, 610), der konfiguriert ist, um an einem Personenbeförderungsfahrzeug (100) befestigt zu werden, wobei der Verglasungsrahmen (310, 610) einen Verglasungsträger (340, 640) umfasst, der sich nach innen entlang eines Teils oder der Gesamtheit des Rahmens (310, 610) erstreckt, und konfiguriert ist, eine Verglasungsplatte (400) mit dem Rahmen (310, 610) zu assoziierten;
einen entfernbaren Halter (360, 660), der konfiguriert ist, um mit dem Rahmen (310, 610) einzugreifen und eine Verglasungsplatte (400) gegen den Verglasungsträger (340, 640) zu halten, und
einen oder mehrere sekundäre Halter (380, 680), die konfiguriert sind, um zusätzlich eine Verglasungsplatte (400) gegen den Träger/Rahmen (340/310, 640/610) zu halten, **dadurch gekennzeichnet, dass** der oder jeder sekundäre Halter (380, 680) von den Passagieren im Wesentlichen durch den entfernbaren Halter (360, 660) im Betrieb verborgen ist.

2. System nach Anspruch 1, wobei der Rahmen (310, 610) einen Rahmenhalter (370, 670) umfasst, und wobei der entfernbare Halter (360, 660) konfiguriert ist, um zwischen dem Rahmenhalter (370, 670) und einer Verglasungstafel (400) durch Pressung einzugreifen, um eine Verglasungsplatte (400) gegen den Verglasungsträger (340, 640) zu halten oder zu drücken und zu halten.

3. System nach Anspruch 2, wobei der Rahmenhalter (370, 670) als eine Vertiefung auf dem Rahmen (310, 610) konfiguriert ist und der entfernbare Halter (360, 660) eine Halterippe (362) umfasst, die konfiguriert ist um sich mit dem vertieften Rahmenhalter (370, 670) anzuordnen und damit einzugreifen.

4. System nach Anspruch 3, wobei der entfernbare Halter (360, 660) zusätzlich ein Anordnungselement (364) umfasst, das mit der Halterippe (362) ausgestattet ist, konfiguriert, um eine komplementäre Anordnung mit einer entsprechenden Vertiefung des Rahmenhalters (370, 670) zu ermöglichen.

5. System nach einem von Ansprüche 2, 3 oder 4, wobei der entfernbare Halter (360, 660) einen Entfernungsdrehpunkt (368, 668) umfasst, der konfiguriert ist, um mit dem Rahmen (310, 610) zusammenzuarbeiten, um die Entfernung des entfernbaren Halters (360, 680) vom Rahmen (310, 610) zu unterstützen.

6. System nach einem der Ansprüche 1 bis 5, wobei der entfernbare Halter (360, 660) als ein entfernbarerer Streifen konfiguriert ist, der konfiguriert ist, um sich entlang eines Teils oder der Gesamtheit des Rahmens (310, 610) zu erstrecken.

7. System nach einem der Ansprüche 1 bis 6, wobei das System eine Rahmendichtung (350, 650) umfasst, und wobei der entfernbare Halter (360, 660) konfiguriert ist, um mit dem Rahmen (310, 610) eingreifen und eine Verglasungsplatte (400) gegen die Rahmendichtung (350, 650) zu drücken und zu halten, die ihrerseits die Verglasungsplatte (400) gegen den Träger (340, 640) des Rahmens (310, 610) hält.

8. System nach einem der Ansprüche 1 bis 7, wobei der oder jeder sekundäre Halter (380, 680) an den Rahmen (310, 610) fixiert ist.

9. System nach Anspruch 8, wobei ein oder mehrere Streifen des entfernbaren Halters (360, 660) eine Vielzahl von diskreten sekundären Haltern (360, 660) abdecken.

10. System nach einem der Ansprüche 1 bis 9, wobei der Rahmen (310, 610) einen oder mehrere äußere Rahmenabschnitte (310b, 610b) und einen oder mehrere innere Rahmenabschnitte (310a, 610b) umfasst, wobei die äußeren und inneren Rahmenabschnitte konfiguriert sind, um mit äußeren bzw. inneren Regionen eines Personenbeförderungsfahrzeugs (100) befestigt zu sein, und optional
wobei die inneren Rahmenabschnitte (310a, 610b) erste und zweite innere Elemente umfassen, wobei die zweiten inneren Elemente entfernbar an das erste innere Element befestigt werden können, und wobei das zweite innere Element, wenn es befestigt ist, konfiguriert ist, um eine Presspassung mit einer austauschbaren inneren Verkleidung (410, 710) zu bilden.

11. System nach einem der Ansprüche 1 bis 10, wobei der Rahmen eine Haftregion (342, 642) umfasst, die konfiguriert ist, um zu ermöglichen, dass der Rahmen (310, 610) am Personenbeförderungsfahrzeug (100) haftet oder auf andere Weise daran befestigt ist; und optional
wobei das System eine oder mehrer Profilschienen umfasst, die derart konfiguriert sind, dass eine Region jeder Schiene, die der Haftregion des Rahmens entspricht, vertieft ist oder innerhalb der Außenseite der Schiene liegt.

12. System nach einem der Ansprüche 1 bis 11, wobei der Rahmen (310, 610) eine oder mehrere Drainageöffnungen (317) umfasst, die durch den Rahmen (310, 610) definiert sind, konfiguriert, um zu ermöglichen, dass Flüssigkeiten wie z.B. Wasser, die im Rahmen (310, 610) eingeschlossen sind, entfernt werden.

13. System nach einem der Ansprüche 1 bis 12,
wobei der Rahmen (310, 610) als eine oder mehrere Extrusionen konfiguriert ist, und/oder
wobei der Rahmen (310, 610), wenn er gebildet ist, nicht selbsttragend ist, und/oder
weiter umfassend eine Verglasungsplatte (400), die mit dem Rahmen (310, 610) gehalten wird, und/oder
wobei das System konfiguriert ist, um eine Vielzahl von Fenstern entlang einer Seite eines Personenbeförderungsfahrzeugs (100) zu bilden.

14. Personenbeförderungsfahrzeug (100), umfassend: ein Verglasungssystem nach einem der Ansprüche 1 bis 13.

15. Verfahren zur Installation oder zum Ersatz einer Verglasungsplatte (400) an einem Personenbeförderungsfahrzeug (100), wobei das Verfahren Folgendes umfasst:
Entfernen eines entfernbaren Halters (360, 660), der mit einem Verglasungsrahmen (310, 610) eingegriffen ist, wobei der entfernbare Halter (360, 660) konfiguriert ist, um eine Verglasungsplatte (400) gegen einen Verglasungsträger (340, 640) zu halten, der sich nach innen entlang eines Teils oder der Gesamtheit des Rahmens (310, 610) erstreckt, wobei der Träger (340, 640) konfiguriert ist, um zu ermöglichen, dass eine Verglasungsplatte (400) mit dem Rahmen (310, 610) assoziiert ist;
Entfernen von einem oder von mehreren sekundären Haltern (380, 680), wobei der oder jeder sekundäre Halter (380, 680) von den Passagieren im Wesentlichen durch den entfernbaren Halter (360, 660) im Betrieb verborgen ist und konfiguriert ist, um zusätzlich eine Verglasungsplatte (400) gegen den Träger/Rahmen (340/640, 310/610) zu halten,
Assoziieren einer Verglasungsplatte (400) mit dem Verglasungsträger (340, 640); und
Ersetzen des oder jedes sekundären Halters (380, 680), um die Verglasungsplatte (400) gegen den Träger/Rahmen zu halten, und dann
Ersetzen der entfernbaren Halters (360, 660), um im Wesentlichen den einen oder die mehreren sekundären Halter (380, 680) zu verbergen und den entfernbaren Halter (360, 660) mit dem Rahmen (310, 610) einzugreifen und die Verglasungsplatte (400) gegen den Träger (340, 640) zu halten.

## Revendications

1. Système de vitrage (300, 600) pour un véhicule de service pour passagers (100), comprenant :
un châssis de vitrage (310, 610) configuré pour se fixer à un véhicule de service pour passagers (100), le châssis de vitrage (310, 610) comprenant une monture de vitrage (340, 640) s'étendant vers l'intérieur le long d'une partie ou de la totalité du châssis (310, 610), et configurée pour associer un panneau de vitrage (400) au châssis (310, 610) ;
un dispositif de retenue amovible (360, 660) configuré pour venir en prise avec le châssis (310, 610), et pour retenir un panneau de vitrage (400) contre la monture de vitrage (340, 640), et
un ou plusieurs dispositifs de retenue secondaires (380, 680), configurés pour retenir de manière supplémentaire un panneau de vitrage (400) contre la monture/le châssis (340/310, 640/610), **caractérisé en ce que** le ou chaque dispositif de retenue secondaire (380, 680), lorsqu'il est utilisé, est essentiellement dissimulé à la vue des passagers grâce au dispositif de retenue amovible (360, 660).

2. Système selon la revendication 1, dans lequel le châssis (310, 610) comprend un dispositif de retenue de châssis (370, 670), et dans lequel le dispositif de retenue amovible (360, 660) est configuré pour venir en prise entre le dispositif de retenue de châssis (370, 670) et un panneau de vitrage (400) d'une manière produisant un blocage afin de retenir, ou de presser et retenir, un panneau de vitrage (400) contre la monture de vitrage (340, 640).

3. Système selon la revendication 2, dans lequel le dispositif de retenue de châssis (370, 670) est configuré en tant que renfoncement sur le châssis (310, 610), et le dispositif de retenue amovible (360, 660) comprend une nervure de retenue (362), configurée pour se mettre en place et en prise avec le dispositif de retenue de châssis en renfoncement (370, 670).

4. Système selon la revendication 3, dans lequel le dispositif de retenue amovible (360, 660) comprend de manière supplémentaire un élément de positionnement (364) muni de la nervure de retenue (362), configuré pour permettre un positionnement complémentaire avec un renfoncement correspondant du dispositif de retenue de châssis (370, 670).

5. Système selon l'une quelconque des revendications 2, 3 ou 4, dans lequel le dispositif de retenue amovible (360, 660) comprend un pivot de retrait (368, 668), configuré pour coopérer avec le châssis (310, 610) afin d'aider au retrait du dispositif de retenue amovible (360, 680) à partir du châssis (310, 610).

6. Système selon l'une quelconque des revendications 1 à 5, dans lequel le dispositif de retenue amovible (360, 660) est configuré en tant que bande amovible, configurée pour s'étendre le long d'une partie ou de la totalité du châssis (310, 610).

7. Système selon l'une quelconque des revendications 1 à 6, dans lequel le système comprend un joint de châssis (350, 650), et dans lequel le dispositif de retenue amovible (360, 660) est configuré pour venir en prise avec le châssis (310, 610), et pour presser et retenir un panneau de vitrage (400) contre le joint de châssis (350, 650), qui à son tour retient le panneau de vitrage (400) contre la monture (340, 640) du châssis (310, 610).

8. Système selon l'une quelconque des revendications 1 à 7, dans lequel le ou chaque dispositif de retenue secondaire (380, 680) est fixé au châssis (310, 610).

9. Système selon la revendication 8, dans lequel une ou plusieurs bande(s) du dispositif de retenue amovible (360, 660) recouvre une pluralité de dispositifs de retenue secondaires (360, 660) distincts.

10. Système selon l'une quelconque des revendications 1 à 9, dans lequel le châssis (310, 610) comprend une ou plusieurs partie(s) châssis extérieur (310b, 610b), et une ou plusieurs partie(s) châssis intérieur (310a, 610b), les parties châssis extérieur et intérieur étant configurées pour se fixer à des régions extérieures et intérieures d'un véhicule de service pour passagers (100) respectivement, et éventuellement
dans lequel les parties châssis intérieurs (310a, 610b) comprennent des premiers et deuxièmes éléments intérieurs, les deuxièmes éléments intérieurs pouvant être fixés de manière détachable au premier élément intérieur, et dans lequel le deuxième élément intérieur est configuré, lorsqu'il est fixé, pour former un ajustement par blocage avec une garniture intérieure réinstallable (410, 710).

11. Système selon l'une quelconque des revendications 1 à 10, dans lequel le châssis comprend une région d'adhérence (342, 642) configurée pour permettre au châssis (310, 610) d'être collé, ou fixé d'une autre manière, à un véhicule de service pour passagers (100), et éventuellement,
dans lequel le système comprend un ou plusieurs rails profilés, configurés de telle manière qu'une région de chaque rail correspondant à la région d'adhérence du châssis est en renfoncement ou vers l'intérieur de l'extérieur du rail.

12. Système selon l'une quelconque des revendications 1 à 11, dans lequel le châssis (310, 610) comprend une ou plusieurs ouvertures de drainage (317) définies grâce au châssis (310, 610) et configurées pour permettre à des fluides, tels que de l'eau, piégés au sein du châssis (310, 610), d'être éliminés.

13. Système selon l'une quelconque des revendications 1 à 12,
dans lequel le châssis (310, 610) est configuré en tant qu'une ou plusieurs protubérance(s), et/ou
dans lequel le châssis (310, 610), lorsqu'il est formé, n'est pas auto-supportant, et/ou
comprenant en outre un panneau de vitrage (400), retenu avec le châssis (310, 610), et/ou
dans lequel le système est configuré pour former une pluralité de fenêtres le long d'un côté d'un véhicule de service pour passagers (100).

14. Véhicule de service pour passagers (100) comprenant un système de vitrage selon l'une quelconque des revendications 1 à 13.

15. Procédé d'installation ou de remplacement d'un panneau de vitrage (400) sur un véhicule de service pour passagers (100), le procédé comprenant les étapes consistant à :
retirer un dispositif de retenue amovible (360, 660) qui est mis en prise avec un châssis de vitrage (310, 610), le dispositif de retenue amovible (360, 660) étant configuré pour retenir un panneau de vitrage (400) contre une monture de vitrage (340, 640) s'étendant vers l'intérieur le long d'une partie ou de la totalité du châssis (310, 610), la monture (340, 640) étant configurée pour permettre d'associer un panneau de vitrage (400) au châssis (310, 610) ;
retirer un ou plusieurs dispositif(s) de retenue secondaire(s) (380, 680), le ou chaque dispositif de retenue secondaire (380, 680), lorsqu'il est utilisé, étant essentiellement dissimulé à la vue des passagers grâce au dispositif de retenue amovible (360, 660) et étant configuré pour retenir de manière supplémentaire un panneau de vitrage (400) contre la monture/le châssis (340/640, 310/610),
associer un panneau de vitrage (400) à la monture de vitrage (340, 640) ; et
remettre en place le ou chaque dispositif de retenue secondaire (380, 680) de manière à retenir le panneau de vitrage (400) contre la monture/le châssis, et ensuite
remettre en place le dispositif de retenue amovible (360, 660) de manière à dissimuler essentiellement le ou les dispositif(s) de retenue secondaire(s) (380, 680) et à mettre en prise le dispositif de retenue amovible (360, 660) avec le châssis (310, 610) et retenir le panneau de vitrage (400) contre la monture (340, 640).
